# EUROPÄISCHE PATENTANMELDUNG

(11) **EP 4 663 582 A1**
(43) Veröffentlichungstag der Anmeldung: **17.12.2025**
(21) Anmeldenummer: 25181263.2
(22) Anmeldetag: 06.06.2025
(51) Int. Cl.: B65G 23/44

(54) **SPANNBARE BANDFÖRDERVORRICHTUNG MIT ROBUSTER SPANNVORRICHTUNG**

(30) Priorität: 11.06.2024 DE 102024116290
(71) Anmelder: KLEEMANN GMBH, 73037 Göppingen (DE)
(72) Erfinder: Köhler, Tobias, 73037 Göppingen (DE)
(74) Vertreter: Ruttensperger Lachnit Trossin Gomoll

(57) **Zusammenfassung**

Eine spannbare Bandfördervorrichtung (24, 26) zur Förderung von mineralischem Material umfasst:
- einen Vorrichtungsrahmen (30),
- eine drehbare Umlenkrolle (36),
- ein endlos umlaufendes Förderband (32),
- einen Lagerbock (60), welcher die Umlenkrolle (36) als Spann-Umlenkrolle (36) drehbar lagert, und
- eine Spannvorrichtung (34) zur Verlagerung der Spann-Umlenkrolle (36) relativ zum Vorrichtungsrahmen (30), wobei die Spannvorrichtung (34) eine Gewindestangenanordnung (38) aufweist.

Die Gewindestangenanordnung (38) weist eine erste Gewindestange (40) mit einer ersten Stellmutter (64) und eine zweite Gewindestange (42) mit einer zweiten Stellmutter (66) auf, wobei die erste Gewindestange (40) an einer Struktur aus Vorrichtungsrahmen (30) und erstem Lagerbock (60) als einer ersten Fixstruktur (58) translatorisch unbeweglich festgelegt ist, wobei die jeweils andere Struktur als eine erste Stützstruktur (68) in Richtung zur ersten Fixstruktur (58) hin durch die erste Stellmutter (64) körperlich abgestützt ist, wobei die zweite Gewindestange (42) an einer Struktur aus Vorrichtungsrahmen (30) und erstem Lagerbock (60) als einer zweiten Fixstruktur (58) translatorisch unbeweglich festgelegt ist, wobei die jeweils andere Struktur als eine zweite Stützstruktur (68) in Richtung zur zweiten Fixstruktur (58) hin durch die zweite Stellmutter körperlich abgestützt ist.

## Beschreibung

Die vorliegende Erfindung betrifft eine spannbare Bandfördervorrichtung zur Förderung von mineralischem Material. Die spannbare Bandfördervorrichtung umfasst:
- einen Vorrichtungsrahmen,
- eine erste und eine zweite Umlenkrolle, welche jeweils von dem Vorrichtungsrahmen getragen sind, wobei jede Umlenkrolle aus der ersten und der zweiten Umlenkrolle um eine quer zur lokalen Förderrichtung am Ort der jeweiligen Umlenkrolle verlaufende virtuelle Rollendrehachse drehbar ist,
- ein endlos um die erste und die zweite Umlenkrolle umlaufendes Förderband,
- eine Lagerbockanordnung mit einem ersten und einem zweiten Lagerbock, wobei der erste und der zweite Lagerbock eine Umlenkrolle aus der ersten und der zweiten Umlenkrolle als eine Spann-Umlenkrolle um ihre virtuelle Spann-Rollendrehachse drehbar lagern, wobei der erste und der zweite Lagerbock längs der virtuellen Spann-Rollendrehachse mit Abstand voneinander angeordnet sind, und
- eine Spannvorrichtung zur Verlagerung der Spann-Umlenkrolle relativ zum Vorrichtungsrahmen längs einer Verlagerungsbahn, welche quer zur virtuellen Rollendrehachse der Spann-Umlenkrolle verläuft, wobei die Spannvorrichtung zur Verlagerung der Lagerbockanordnung eine Gewindestangenanordnung mit wenigstens einer Gewindestange aufweist.

Eine derartige spannbare Bandfördervorrichtung für eine Gesteinsverarbeitungsvorrichtung mit einer Brecheinrichtung und Siebeinrichtung ist aus der CN 103950690 A bekannt. Jeder der Lagerböcke der Spann-Umlenkrolle der bekannten Bandfördervorrichtung ist auf entgegengesetzten Seiten des Vorrichtungsrahmens mit einer längs der Förderrichtung des Förderbandes ausziehbaren Auszugsvorrichtung verbunden. Die Auszugsvorrichtung umfasst eine den jeweiligen Lagerbock tragende Führungsstange und ein die Führungsstange umgebendes Führungsgehäuse. Das Führungsgehäuse gestattet einen Bewegungsfreiheitsgrad der Führungsstange relativ zum Führungsgehäuse nur längs der Stangenlängsachse zur Bewegung der Führungsstange in das Führungsgehäuse hinein und aus diesem hinaus.

Das Führungsgehäuse weist an seinem vom zugeordneten Lagerbock fernliegenden Endbereich, welcher das vom Lagerbock fernliegende Längsende der Führungsstange aufnimmt, eine Durchgangsöffnung auf, die zwar von einer Gewindestange, nicht jedoch von der Führungsstange selbst durchsetzt werden kann. Die Gewindestange ist kollinear fluchtend mit der Führungsstange an einer Halterung am Vorrichtungsrahmen aufgenommen. Die Gewindestange durchsetzt eine Durchgangsöffnung der Halterung und ist mit einem Innengewinde der Durchgangsöffnung in Schraubeingriff, sodass durch Drehung der Gewindestange die Gewindestange zur Führungsstange zugestellt oder von dieser zurückgezogen werden kann. Somit kann der Lagerbock unter Vermittlung der Führungsstange durch Drehung der zugeordneten Gewindestange längs der Stangenlängsachse verlagert werden.

Aus der GB 2 367 797 B ist eine Röntgenvorrichtung mit einem Förderband bekannt. Das Förderband weist eine angetriebene Umlenkrolle und eine Spann-Umlenkrolle auf. Die um ihre virtuelle Spann-Rollendrehachse drehbare Spann-Umlenkrolle ist längs einer Förderbahn des Förderbands beweglich am Vorrichtungsrahmen aufgenommen. Eine die Spann-Rollendrehachse körperlich realisierende Umlenkrollenachse ist beiderseits der Spann-Umlenkrolle durch je eine Schraubenfeder in Richtung von der längs der Förderbahn entgegengesetzten angetriebenen Umlenkrolle weg belastet. Während das eine Federwiderlager von der körperlichen Umlenkrollenachse selbst gebildet ist, ist das entgegengesetzte Federwiderlager von einer Abstützplatte gebildet, welche von einer Gewindestange durchsetzt ist und sich im Schraubeingriff mit dieser befindet. Die Gewindestange selbst ist axial am Vorrichtungsrahmen abgestützt, sodass durch Drehung der Gewindestange die Abstützplatte zur körperlichen Umlenkrollenachse hin oder von dieser weg verlagert werden kann. Hierdurch wird die von den Schraubenfedern auf die körperlichen Umlenkrollenachsen ausgeübte Vorspannkraft verändert.

Aus der CN 204341867 U ist eine Doppelketten-Fördervorrichtung bekannt, deren Spann-Umlenkwelle mit darauf angeordneten Kettenrädern durch einen schwenkbar am Vorrichtungsrahmen angelenkten Gelenkhebel verlagerbar ist. Die Spann-Umlenkwelle ist um eine virtuelle Spann-Wellendrehachse drehbar, welche den Gelenkhebel zwischen dem rahmenfesten Anlenkort des Gelenkhebels am Vorrichtungsrahmen und dem Anlenkort eines den Gelenkhebel um den rahmenfesten Anlenkort verschwenkenden Kraftgeräts durchsetzt. Durch Verschwenken des Gelenkhebels um den rahmenfesten Anlenkort wird somit abhängig vom Abstand der virtuellen Spann-Wellendrehachse vom rahmenfesten Anlenkort auch die virtuelle Spann-Wellendrehachse und die Spann-Umlenkrolle verlagert.

Die oben genannten bekannten Lösungen sind durchwegs kompliziert im Aufbau und sind, wie etwa im Falle der GB 2 367 797 B, nicht zur Anwendung an einer robusten Bandfördervorrichtung einer Verarbeitungsvorrichtung zur Verarbeitung mineralischer Werkstoffe geeignet.

Es ist Aufgabe der vorliegenden Erfindung, eine für eine Förderung von mineralischem Material geeignete robuste Bandfördervorrichtung anzugeben, deren endlos umlaufendes Förderband durch eine möglichst robuste und einfach aufgebaute Spannvorrichtung möglichst robust, einfach und zuverlässig im erforderlichen Umfang gespannt und ausgerichtet werden kann.

Eine ausreichende Spannung eines endlos umlaufenden Förderbandes ist für einen möglichst schlupffreien Antrieb des Förderbandes durch eine angetriebene Rolle und für eine möglichst definierte Umlaufbewegung des Förderbandes während seines Förderbetriebs wichtig. Dabei herrschen gerade bei der Förderung von mineralischem Material aufgrund unvermeidlich auftretender mineralischer Stäube und sonstiger Verschmutzung widrige Betriebsbedingungen. Im Falle eines gewünschten Einsatzes der spannbaren Bandfördervorrichtung an einer Brech- oder/und Siebvorrichtung für mineralisches Material kommen noch erhebliche mechanische schwellende und wechselnde Belastungen hinzu. Darüber hinaus kann während eines Betriebs des Förderbandes der Förderbandlauf in seitlicher Richtung vom gewünschten Verlauf abweichen.

Die vorliegende Erfindung löst die genannte Aufgabe an einer eingangs genannten spannbaren Bandfördervorrichtung dadurch, dass die Gewindestangenanordnung wenigstens eine sich längs einer virtuellen ersten Stangenachse erstreckende erste Gewindestange mit jeweils einer von der ersten Gewindestange im Schraubeingriff getragenen ersten Stellmutter aufweist und wenigstens eine sich längs einer virtuellen zweiten Stangenachse erstreckende zweite Gewindestange mit jeweils einer von der zweiten Gewindestange im Schraubeingriff getragenen zweiten Stellmutter aufweist.

Mit wenigstens zwei Gewindestangen, also wenigstens einer ersten Gewindestange und wenigstens einer zweiten Gewindestange, kann eine stabile und robuste Verbindung zwischen dem ersten Lagerbock und dem Vorrichtungsrahmen mit stets als Meterware verfügbarem Gewindestangenhalbzeug oder stets verfügbaren Standardbauteilen hergestellt werden. Das gleiche gilt für die wenigstens zwei Stellmuttern, also die wenigstens eine erste Stellmutter und die wenigstens eine zweite Stellmutter. Zwar ist jedes von einer Gewindestange im Schraubeingriff durchsetzbare Bauteil mit Innengewinde, welches im Schraubeingriff mit einer Gewindestange durch Schraubbewegung längs der Gewindestange verlagerbar ist, eine Stellmutter im Sinne der vorliegenden Anmeldung. Bevorzugt sind Stellmuttern jedoch Normbauteile mit genormten Innengewinden, welche zu den bevorzugten Gewindestangen mit genormten Außengewinden passen.

Der beschriebene Aufbau der spannbaren Bandfördervorrichtung ermöglicht in äußerst vorteilhafter Weise den Ausgleich von seitlichen Bandlaufabweichungen.

Die wenigstens eine erste Gewindestange ist an einer Struktur aus Vorrichtungsrahmen und erstem Lagerbock als einer ersten Fixstruktur relativ zur ersten Fixstruktur translatorisch längs der virtuellen ersten Stangenachse unbeweglich festgelegt. Die jeweils andere Struktur aus Vorrichtungsrahmen und erstem Lagerbock ist als eine erste Stützstruktur in Richtung zur ersten Fixstruktur hin durch die wenigstens eine erste Stellmutter körperlich abgestützt.

Analog zur wenigstens einen ersten Gewindestange ist die wenigstens eine zweite Gewindestange an einer Struktur aus Vorrichtungsrahmen und erstem Lagerbock als einer zweiten Fixstruktur relativ zur zweiten Fixstruktur translatorisch längs der virtuellen zweiten Stangenachse unbeweglich festgelegt ist, wobei die jeweils andere Struktur aus Vorrichtungsrahmen und erstem Lagerbock als eine zweite Stützstruktur in Richtung zur zweiten Fixstruktur hin durch die wenigstens eine zweite Stellmutter körperlich abgestützt ist.

Aufgrund der Selbsthemmung von zueinander passenden Innen- und Außengewinden mit ausreichend geringer Gewindesteigung, insbesondere von passenden normierten Innen- und Außengewinden, kann die wenigstens eine erste Stellmutter einen präzise längs der ersten Gewindestange anordenbaren mechanischen Anschlag für die erste Stützstruktur bilden. Für die wenigstens eine zweite Stellmutter gilt im Verhältnis zur zweiten Stützstruktur das Gleiche. So können die Stellmuttern hohe Spannkräfte aufnehmen, ohne dass zur Positionssicherung der Stellmuttern an den sie jeweils tragenden Gewindestangen besondere Maßnahmen ergriffen werden müssten.

Dadurch ist in einfacher Weise der Abstand zwischen der ersten Fixstruktur und der ersten Stützstruktur längs der virtuellen ersten Stangenachse durch Drehung der wenigstens einen ersten Stellmutter relativ zur wenigstens einen ersten Gewindestange um die virtuelle erste Stangenachse veränderbar. Ebenso ist durch die gewählte Konstruktion in einfacher Weise der Abstand zwischen der zweiten Fixstruktur und der zweiten Stützstruktur längs der virtuellen zweiten Stangenachse durch Drehung der wenigstens einen zweiten Stellmutter relativ zur wenigstens einen zweiten Gewindestange um die virtuelle zweite Stangenachse veränderbar.

Bevorzugt trägt jede Gewindestange genau eine Stellmutter. Diese kann an der betroffenen Gewindestange durch eine Kontermutter in an sich bekannter Weise positionsgesichert sein.

Der zweite Lagerbock der Lagerbockanordnung kann in beliebiger anderer Weise relativ zum Vorrichtungsrahmen verlagerbar angeordnet sein. Er ist jedoch bevorzugt in gleicher Weise wie der erste Lagerbock durch die Spannvorrichtung mit dem Vorrichtungsrahmen ortsveränderlich verbunden. Dies wird weiter unten näher ausgeführt werden.

In einer besonders einfachen Ausführungsform reichen daher genau eine erste und genau eine zweite Gewindestange mit einer ersten und einer zweiten Stellmutter aus, um den ersten Lagerbock in einem gewünschten Abstand von dem Vorrichtungsrahmen anzuordnen und dadurch das endlos umlaufenden Förderband zu spannen.

Grundsätzlich ist es möglich, dass die erste und die zweite Fixstruktur unterschiedliche Bauteile sind, also dass beispielsweise die erste Fixstruktur der Vorrichtungsrahmen und die zweite Fixstruktur der erste Lagerbock ist oder umgekehrt. Auch dies ermöglicht eine Anordnung des ersten Lagerbocks mit definiertem Abstand vom Vorrichtungsrahmen. Allerdings kann die Einstellung dieses definierten Abstands über beide Gewindestangen in der genannten Konstellation mühsamer sein als notwendig. Bevorzugt ist daher die erste Fixstruktur auch die zweite Fixstruktur, sodass dasselbe Bauteil, der erste Lagerbock oder der Vorrichtungsrahmen, in Richtung zum jeweils anderen Bauteil aus erstem Lagerbock und Vorrichtungsrahmen, also zur ersten und zur gleichen zweiten Stützstruktur, durch die wenigstens eine erste Stellmutter und durch die wenigstens eine zweite Stellmutter in seiner Position längs der Verlagerungsbahn festlegbar ist. Bevorzugt ist der Vorrichtungsrahmen als das massereichere Bauteil der beiden genannten Bauteile und als das ohnehin üblicherweise bezüglich des Untergrunds am Aufstellungsort ortsfest vorgesehene Bauteil die erste oder/und zweite Fixstruktur. Besonders bevorzugt ist der Vorrichtungsrahmen die erste und die zweite Fixstruktur. Folgerichtig ist bevorzugt der verglichen mit dem Vorrichtungsrahmen kleinere erste Lagerbock die erste oder/und zweite Stützstruktur. Besonders bevorzugt ist der erste Lagerbock die erste und die zweite Stützstruktur.

Die wenigstens eine zweite Gewindestange ist bevorzugt in gleicher Weise weitergebildet wie die wenigstens eine erste Gewindestange. Daher gelten die nachfolgend zur wenigstens einen ersten Gewindestange gemachten Aussagen mutatis mutandis auch für die wenigstens eine zweite Gewindestange, wobei die mit der wenigstens einen ersten Gewindestange kooperierenden Bauteile, wie etwa erste Fixstruktur, erste Stützstruktur und erste Stellmutter entsprechend durch die mit der wenigstens einen zweiten Gewindestange kooperierenden Bauteile, wie etwa zweite Fixstruktur, zweite Stützstruktur und zweite Stellmutter, zu ersetzen sind.

Grundsätzlich kann die erste Gewindestange dauerhaft fest mit der ersten Fixstruktur verbunden sein, beispielsweise durch Verschweißen. Dies ist jedoch aus mehreren Gründen nicht bevorzugt. Zum einen kann der beim Schweißen auftretende thermische Verzug richtende Nachbearbeitung notwendig machen. Zum anderen kann eine schadhafte Gewindestange nur mit erheblichem Aufwand ersetzt werden.

Bevorzugt ist daher vorgesehen, dass die wenigstens eine erste Gewindestange eine erste Befestigungsformation der ersten Fixstruktur durchsetzt, wobei die erste Befestigungsformation zwischen zwei mit der ersten Gewindestange verbundenen fixstrukturseitigen Klemmformationen geklemmt ist. Alternativ oder bevorzugt zusätzlich ist ebenfalls bevorzugt vorgesehen, dass die wenigstens eine zweite Gewindestange eine zweite Befestigungsformation der zweiten Fixstruktur durchsetzt, wobei die zweite Befestigungsformation zwischen zwei mit der zweiten Gewindestange verbundenen fixstrukturseitigen Klemmformationen geklemmt ist.

Die beiden fixstrukturseitigen Klemmformationen der wenigstens einen ersten Gewindestange bzw. der wenigstens einen zweiten Gewindestange können zwei Muttern sein, welche im Schraubeingriff mit der jeweiligen wenigstens einen Gewindestange gegen die jeweilige Befestigungsformation angezogen werden. Noch einfacher und daher stärker bevorzugt ist wenigstens eine erste Gewindestange der wenigstens einen ersten Gewindestange ein Gewindeschaft einer Schraube mit einem stoffschlüssig mit dem Gewindeschaft verbundenen Schraubenkopf als eine erste Klemmformation. Alternativ oder bevorzugt zusätzlich ist wenigstens eine zweite Gewindestange der wenigstens einen zweiten Gewindestange ein Gewindeschaft einer Schraube mit einem stoffschlüssig mit einem Gewindeschaft verbundenen Schraubenkopf als eine Klemmformation, bevorzugt zweite Klemmformation. Besonders bevorzugt ist die wenigstens eine erste oder/und zweite Gewindestange eine handelsübliche Schraube, etwa mit einem normierten Gewinde M18, M20, M22 oder größer oder mit einem vergleichbar großen Gewinde einer anderen Normierung. Dann reicht es aus, eine normierte Mutter als weitere Klemmformation zu verwenden, um die wenigstens eine erste Gewindestange oder/und die wenigstens eine zweite Gewindestange an der jeweiligen Befestigungsformation festzulegen und die jeweilige Befestigungsformation zwischen den durch Mutter und Schraubenkopf gebildeten Klemmformationen zu klemmen. Zwischen einem Schraubenkopf oder/und einer Mutter einerseits und der jeweiligen Befestigungsformation andererseits kann wenigstens eine, bevorzugt normierte, Unterlegscheibe angeordnet sein.

In einer alternativen Ausgestaltungsform kann bzw. können die wenigstens eine erste Gewindestange oder/und die wenigstens eine zweite Gewindestange durch einen Gewindeeingriff mit der jeweiligen Befestigungsformation an dieser festgelegt sein. Hierzu kann eine Durchgangsöffnung der Befestigungsformation, in welche eine Gewindestange einragt oder welche von einer Gewindestange durchsetzt ist, ein zum Außengewinde der Gewindestange passendes Innengewinde aufweisen.

Durch Verwendung einer Schraube als der wenigstens einen ersten oder/und zweiten Gewindestange kann die Gewindestange vorteilhaft kurz ausgebildet sein. Sie endet am Schraubenkopf, welcher an einer Anlagefläche der jeweiligen Befestigungsformation anliegen kann.

Bevorzugt ist die erste Befestigungsformation einstückig mit der zweiten Befestigungsformation ausgebildet, etwa als ein materialeinheitlicher Lagerabschnitt. Ist die Befestigungsformation, gemäß einer bevorzugten Ausführungsform, am Vorrichtungsrahmen ausgebildet oder angeordnet, kann eine aus erster und zweiter Befestigungsformation gebildete gemeinsame Befestigungsformation ein, vorzugsweise ebener, Blechabschnitt sein, welcher ausreichend Durchsetzungsöffnungen für die wenigstens eine erste Gewindestange und die wenigstens eine zweite Gewindestange aufweist. Die so gebildete gemeinsame Befestigungsformation kann zur Erhöhung der Festigkeit der Aufnahme der Spannvorrichtung einstückig als Biegeabschnitt mit einem weiteren Abschnitt des Vorrichtungsrahmens zusammenhängen.

Es soll jedoch auch ein eine an den übrigen Vorrichtungsrahmen angebaute oder/und stoffschlüssig verbundene gemeinsame Befestigungsformation nicht ausgeschlossen sein.

Zur Vermeidung unnötig großer Bauteilanzahlen weist die wenigstens eine erste Gewindestange vorzugsweise genau eine erste Gewindestange auf. Aus dem gleichen Grund weist bevorzugt die wenigstens eine zweite Gewindestange genau eine zweite Gewindestange auf.

Grundsätzlich kann es ausreichen, die wenigstens eine erste Gewindestange nur axial unbeweglich an der ersten Fixstruktur festzulegen. Eine besonders einfache Lageveränderung der wenigstens einen ersten Stellmutter an der wenigstens einen ersten Gewindestange durch Schraubbewegung der ersten Stellmutter ohne erforderliches Gegenhalten der wenigstens einen ersten Gewindestange wird gemäß einer vorteilhaften Weiterbildung dadurch ermöglicht, dass die wenigstens eine erste Gewindestange relativ zur ersten Fixstruktur rotatorisch um die virtuelle erste Stangenachse unbeweglich angeordnet ist. Alternativ oder bevorzugt zusätzlich ist die wenigstens eine erste Gewindestange relativ zur ersten Stützstruktur rotatorisch um die erste virtuelle Stangenachse unbeweglich angeordnet. Eine Rotation der wenigstens einen ersten Gewindestange um ihre virtuelle erste Stangenachse ist für die Veränderung des Abstands zwischen Fixstruktur und erster Stellmutter nicht notwendig. Alternativ oder bevorzugt zusätzlich gilt für die wenigstens eine zweite Gewindestange mutatis mutandis das gleiche. Auch sie ist bevorzugt relativ zur zweiten Fixstruktur oder/und relativ zur zweiten Stützstruktur rotatorisch um die virtuelle zweite Stangenachse unbeweglich angeordnet ist.

Während im Stand der Technik Gewindestangen, durch welche der Abstand zwischen einer Spann-Umlenkrolle und dem Vorrichtungsrahmen veränderbar ist, häufig mit Abstand von der Spann-Umlenkrolle und deren Lagerung angeordnet sind, kann die Spannvorrichtung der vorliegenden Anmeldung eine vorteilhaft geringe Baulänge erzielen, indem die wenigstens eine erste Gewindestange in wenigstens eine erste Aufnahmeöffnung der ersten Stützstruktur einragt oder/und dass die wenigstens eine zweite Gewindestange in wenigstens eine zweite Aufnahmeöffnung der zweiten Stützstruktur einragt. Bevorzugt sind ebenso viele erste Aufnahmeöffnungen wie erste Gewindestangen vorhanden. Gleiches gilt für das Verhältnis der Anzahl von zweiten Aufnahmeöffnungen zur zweiten Gewindestangen.

Wie bereits oben erläutert wurde, dient die jeweilige Stellmutter an ihrer Gewindestange als körperlicher Anschlag für die Stützstruktur, welche durch die von der am Förderband erzeugten Vorspannkraft bewirkte Reaktionskraft zur Fixstruktur gedrängt wird. Die jeweilige Stellmutter begrenzt so körperlich eine Annäherung zwischen der Stützstruktur und der Fixstruktur.

Zur weiteren Verringerung der zur Bildung der Spannvorrichtung benötigten Bauteileanzahl ist die Spannvorrichtung bevorzugt frei von Federbauteilen, also von solchen Bauteilen, welche durch makroskopische elastische Verformung abhängig vom Grad der Verformung eine ihrer Verformung entgegenwirkende Kraft ausüben. Zwar ist jedes Bauteil, welches beispielsweise durch Schrauben und Muttern geklemmt ist, im strengen wissenschaftlichen Sinne auch eine Hooke'sche Feder, jedoch ist die durch die Abmessungen des Bauteils und den Elastizitätsmodul des jeweiligen Bauteilmaterials bewirkte Federhärte eines Bauteils gegenüber einer Federhärte eines zur elastischen makroskopischen Verformung ausgebildeten Federbauteils so groß, dass die auftretenden Kräfte eine angesichts der Gesamtabmessung der Spannvorrichtung nur eine vernachlässigbare elastische Verformung, etwa von 2 mm oder weniger, an der Spannvorrichtung bewirken. Die wenigstens eine erste Gewindestange oder/und die wenigstens eine zweite Gewindestange ist bzw. sind bevorzugt aus Stahl gebildet, ebenso die wenigstens eine erste Stellmutter oder/und die wenigstens eine zweite Stellmutter.

Eine noch größere Positionssicherheit der ersten Stützstruktur kann dadurch erreicht werden, dass die wenigstens eine erste Gewindestange eine die erste Aufnahmeöffnung aufweisende erste Halteformation der ersten Stützstruktur durchsetzt, wobei die erste Halteformation zwischen zwei mit der wenigstens einen ersten Gewindestange verbundenen stützstrukturseitigen Klemmformationen geklemmt ist. Alternativ oder bevorzugt zusätzlich kann gemäß der diskutierten bevorzugten Weiterbildung die wenigstens eine zweite Gewindestange eine die zweite Aufnahmeöffnung aufweisende zweite Halteformation der zweiten Stützstruktur durchsetzen, wobei die zweite Halteformation zwischen zwei mit der wenigstens einen zweiten Gewindestange verbundenen stützstrukturseitigen Klemmformationen geklemmt ist.

In vorteilhafter Weise kann eine der mit der wenigstens einen ersten Gewindestange verbundenen stützstrukturseitigen Klemmformationen die wenigstens eine erste Stellmutter sein oder/und kann eine der mit der wenigstens einen zweiten Gewindestange verbundenen stützstrukturseitigen Klemmformationen die wenigstens eine zweite Stellmutter sein. Zum Klemmen der ersten bzw. der zweiten Halteformation kann somit zusätzlich zur jeweiligen Stellmutter eine weitere Mutter ausreichen, welche auf das die jeweilige Aufnahmeöffnung durchsetzende Längsende der betreffenden Gewindestange aufgeschraubt wird.

Wie oben dargelegt wurde, ist die erste und die zweite Stützstruktur bevorzugt der erste Lagerbock. Bevorzugt ist der erste Lagerbock zumindest teilweise einstückig ausgebildet, wobei aus Festigkeitsgründen sowie aus Gründen guter Maßhaltigkeit bevorzugt die erste und die zweite Aufnahmeöffnung an einem einstückigen Abschnitt des ersten Lagerbocks ausgebildet sind. Die erste und die zweite Halteformation bilden somit bevorzugt eine gemeinsame einstückige Halteformation, analog zu der oben beschriebenen gemeinsamen Befestigungsformation. Weiter bevorzugt ist für jede Gewindestange eine eigene Aufnahmeöffnung vorgesehen, die nur von einer Gewindestange durchsetzt wird.

In vorteilhafter Weise kann ein handelsüblicher Lagerbock als erster Lagerbock mit langer Betriebslebensdauer verwendet werden, wenn zwischen der wenigstens einen ersten Stellmutter und der ersten Stützstruktur wenigstens ein starres erstes Zwischenstück angeordnet ist oder/und wenn zwischen der wenigstens einen zweiten Stellmutter und der ersten Stützstruktur wenigstens ein starres zweites Zwischenstück angeordnet ist. Die genannten Zwischenstücke müssen nicht vorgesehen sein, können jedoch die Einleitung der Abstützkraft lokal von den Stellmuttern in den ersten Lagerbock in vorteilhafter Weise auf eine größere Bauteilfläche verteilen. Aus diesen Gründen ist wiederum bevorzugt, wenn das erste Zwischenstück und das zweite Zwischenstück ein einstückiges gemeinsames Zwischenstück sind, was eine große Anlagefläche einer Auflageseite des ersten Lagerbocks an dem gemeinsamen Zwischenstück und somit eine vorteilhafte großflächige Krafteinleitung der Abstützkräfte in den Lagerbock ermöglicht. Bevorzugt ist das erste oder/und das zweite oder das gemeinsame Zwischenstück aus Metall, insbesondere aus Stahl, gebildet.

Sofern eine Mehrzahl erster Gewindestangen vorgesehen ist, sind die ersten Gewindestangen bevorzugt zueinander parallel. Gleiches gilt für eine vorgesehene Mehrzahl zweiter Gewindestangen. Bevorzugt sind die virtuelle erste Stangenachse und die virtuelle zweite Stangenachse zueinander parallel, um eine Abstandsänderung zwischen der wenigstens einen ersten Stellmutter und der ersten Fixstruktur und zwischen der wenigstens einen zweiten Stellmutter und der zweiten Fixstruktur in identischer Richtung bewirken zu können. Hierdurch werden unnötige Montagekräfte vermieden. Immer noch unnötige, aber ausreichend geringe Montagekräfte aufgrund einer Fehlorientierung der virtuellen ersten Stangenachse und der virtuellen zweiten Stangenachse relativ zueinander können dadurch erhalten werden, dass die virtuelle erste Stangenachse und die virtuelle zweite Stangenachse einen Winkel von nicht mehr als 15° einschließen.

Unerwünschte Kippmomente und übermäßig ungleiche Kraftverteilungen an der wenigstens einen ersten Gewindestange und an der wenigstens einen zweiten Gewindestange können dadurch vermieden werden, dass die wenigstens eine erste Gewindestange und die wenigstens eine zweite Gewindestange derart angeordnet sind, dass die verlängert gedachte virtuelle Spann-Rollendrehachse zwischen den verlängert gedachten virtuellen Stangenachsen der wenigstens einen ersten und der wenigstens einen zweiten Gewindestange hindurch verläuft.

Außerdem kann an eine im Stand der Technik häufig zusätzlich zur Befestigungsstruktur vorhandene Führungsstruktur der Spannvorrichtung eingespart werden. Bevorzugt ist der erste Lagerbock nur durch die oben genannten Bauteile relativ zum Vorrichtungsrahmen positioniert, gegebenenfalls erweitert um eine oder mehrere Kontermuttern zur verbesserten Festlegung sowie um eine oder mehrere Unterlegscheiben.

Wie oben bereits angedeutet wurde, ist der zweite Lagerbock bevorzugt analog zum ersten Lagerbock mit veränderbarem Abstand zum Vorrichtungsrahmen mit dem Vorrichtungsrahmen verbunden. Hierzu ist bevorzugt vorgesehen, dass die Gewindestangenanordnung wenigstens eine sich längs einer virtuellen dritten Stangenachse erstreckende dritte Gewindestange mit einer jeweiligen von der wenigstens einen dritten Gewindestange im Schraubeingriff getragenen dritten Stellmutter und wenigstens eine sich längs einer virtuellen vierten Stangenachse erstreckende vierte Gewindestange mit jeweils einer von der wenigstens einen vierten Gewindestange im Schraubeingriff getragenen vierten Stellmutter aufweist.

Durch den geschilderten Aufbau der Spannvorrichtung kann in vorteilhafter Weise dazu genutzt werden, die Orientierung der Spann-Rollendrehachse relativ zur gewünschten Förderrichtung des Förderbandes einzustellen und so seitlichen Bandlaufabweichungen einfach, schnell und sicher entgegenzuwirken. Die Spannvorrichtung kann eine erste Spannvorrichtung sein, welche an der Bandfördervorrichtung zusätzlich zu einer zweiten Spannvorrichtung eingesetzt ist.

Die wenigstens eine dritte Gewindestange ist an einer Struktur aus Vorrichtungsrahmen und zweitem Lagerbock als einer dritten Fixstruktur translatorisch längs der virtuellen dritten Stangenachse unbeweglich festgelegt, wobei die jeweils andere Struktur aus Vorrichtungsrahmen und zweitem Lagerbock als eine dritte Stützstruktur in Richtung zur dritten Fixstruktur hin durch die wenigstens eine dritte Stellmutter körperlich abgestützt ist.

Die wenigstens eine vierte Gewindestange ist an einer Struktur aus Vorrichtungsrahmen und zweitem Lagerbock als einer vierten Fixstruktur translatorisch längs der virtuellen vierten Stangenachse unbeweglich festgelegt, wobei die jeweils andere Struktur aus Vorrichtungsrahmen und zweitem Lagerbock als eine vierte Stützstruktur in Richtung zur vierten Fixstruktur hin durch die wenigstens eine vierte Stellmutter körperlich abgestützt ist.

Allgemein gilt, dass bevorzugt das oben zur wenigstens einen ersten Gewindestange und dem ersten Lagerbock Gesagte auch für die wenigstens eine dritte Gewindestange und den zweiten Lagerbock gilt oder/und dass das oben zur wenigstens einen zweiten Gewindestange und dem ersten Lagerbock Gesagte auch für die wenigstens eine vierte Gewindestange und den zweiten Lagerbock gilt. Gleiches gilt für oben genannte mit der wenigstens einen ersten Gewindestange kooperierende Bauteile. Mit der wenigstens einen dritten Gewindestange können gleiche Bauteile in gleicher Weise kooperieren, wie Bauteile mit der wenigstens einen ersten Gewindestange kooperierend beschrieben sind. Gleiches gilt für die wenigstens eine vierte Gewindestange. Mit dieser können gleiche Bauteile in gleicher Weise kooperieren, wie sie oben als mit der wenigstens einen zweiten Gewindestange kooperierend beschrieben sind.

Bevorzugt ist die Spanneinrichtung bezüglich einer zur virtuellen Spann-Rollendrehachse orthogonalen Symmetrie-Mittelebene symmetrisch ausgebildet.

Die Bandfördervorrichtung kann mehr als die beiden genannten Umlenkrollen aufweisen. Allerdings sind die erste und die zweite Umlenkrolle wenigstens notwendig, um ein mineralisches Material förderndes Obertrum des endlos umlaufenden Förderbands von einem materialfrei rücklaufenden Untertrum funktional zu trennen.

Die vorliegende Erfindung betrifft außerdem eine Verarbeitungsvorrichtung, insbesondere selbstfahrende Verarbeitungsvorrichtung, zur zerkleinernden oder/und sortierenden Verarbeitung von mineralischem Material, umfassend eine Materialaufgabe, wenigstens eine Zerkleinerungseinrichtung, wie etwa Brecheinrichtung, oder/- und wenigstens eine Sortiereinrichtung, wie etwa Siebeinrichtung, und wenigstens eine spannbare Bandfördervorrichtung wie sie oben beschrieben und weitergebildet ist.

In einer bevorzugten Ausführungsform betrifft die vorliegende Erfindung eine spannbare Bandfördervorrichtung zur Förderung von mineralischem Material umfasst:
- einen Vorrichtungsrahmen,
- eine um eine quer zur lokalen Förderrichtung verlaufende virtuelle Rollendrehachse drehbare Umlenkrolle,
- ein endlos um die Umlenkrolle umlaufendes Förderband,
- einen Lagerbock, welcher die Umlenkrolle als Spann-Umlenkrolle um ihre virtuelle Spann-Rollendrehachse drehbar lagert, und
- eine Spannvorrichtung zur Verlagerung der Spann-Umlenkrolle relativ zum Vorrichtungsrahmen längs einer Verlagerungsbahn, wobei die Spannvorrichtung zur Verlagerung des Lagerbocks eine Gewindestangenanordnung mit wenigstens einer Gewindestange aufweist.

Erfindungsgemäß ist vorgesehen, dass die Gewindestangenanordnung eine sich längs einer virtuellen ersten Stangenachse erstreckende erste Gewindestange mit einer ersten Stellmutter und eine sich längs einer virtuellen zweiten Stangenachse erstreckende zweite Gewindestange mit einer zweiten Stellmutter aufweist, wobei die erste Gewindestange an einer Struktur aus Vorrichtungsrahmen und erstem Lagerbock als einer ersten Fixstruktur translatorisch längs der virtuellen ersten Stangenachse unbeweglich festgelegt ist, wobei die jeweils andere Struktur als eine erste Stützstruktur in Richtung zur ersten Fixstruktur hin durch die erste Stellmutter körperlich abgestützt ist, wobei die zweite Gewindestange an einer Struktur aus Vorrichtungsrahmen und erstem Lagerbock als einer zweiten Fixstruktur translatorisch längs der virtuellen zweiten Stangenachse unbeweglich festgelegt ist, wobei die jeweils andere Struktur als eine zweite Stützstruktur in Richtung zur zweiten Fixstruktur hin durch die zweite Stellmutter körperlich abgestützt ist. Auch für diese Ausführungsform gelten die oben erläuterten vorteilhaften Weiterbildungen.

Die vorliegende Erfindung mit nachfolgend anhand der beiliegenden Zeichnungen näher erläutert werden. Es stellt dar:
- Fig. 1: eine perspektivische Ansicht einer beispielhaften Gesteinsverarbeitungsvorrichtung mit einer spannbaren Bandfördervorrichtung der vorliegenden Erfindung,
- Fig. 2: eine perspektivische Teilansicht einer Spann-Umlenkrolle, getragen von einem ersten Lagerbock, welcher mittels einer Spannvorrichtung am Vor- richtungsrahmen in einer Position maximaler Annäherung an den Vorrichtungsrahmen angeordnet ist, und
- Fig. 3: die Teilansicht von Fig. 2 mit maximal vom Vorrichtungsrahmen entfernt angeordnetem erstem Lagerbock.

Die Figuren sind nicht maßstabsgerecht, geben aber Größenverhältnisse von Bauteilen und Baugruppen untereinander zutreffend wieder.

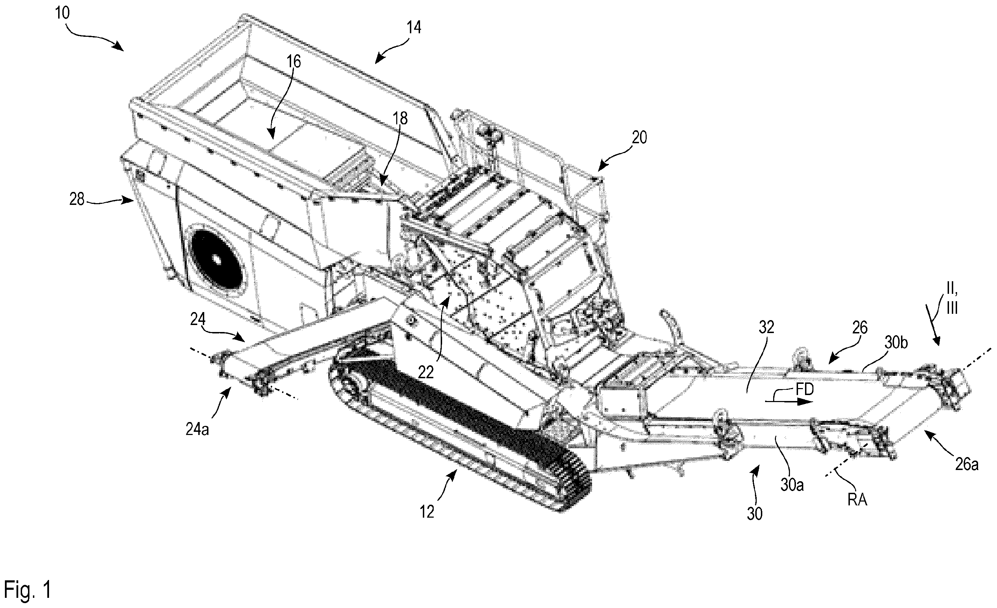

In Fig. 1 ist eine mobile selbstfahrende Gesteinsverarbeitungsvorrichtung perspektivisch dargestellt und allgemein mit 10 bezeichnet. Die Gesteinsverarbeitungsvorrichtung steht auf Raupenfahrwerken 12, mit welchen sie zwischen ihrem Einsatzort und einem Transportgerät oder zwischen zwei Einsatzorten bewegt werden kann.

Die Gesteinsverarbeitungsvorrichtung 10 weist eine Materialaufgabe 14 auf, in welche mineralisches Material von einem geeigneten Gerät, wie etwa von einem Bagger oder einem Radlader, eingegeben wird.

Ein Rüttelförderer 16 fördert das in die Materialaufgabe 14 aufgegebene mineralische Material zu einem Vorsieb 18 als einer ersten Siebeinrichtung. In der Gesteinsverarbeitungsvorrichtung 10 sind außerdem eine Brecheinrichtung 20, etwa ein Prallbrecher, ein Kegelbrecher, ein Kreiselbrecher, ein Walzenbrecher oder ein Backenbrecher, zur Zerkleinerung des aufgegebenen und vorgesiebten (vorsortierten) mineralischen Materials sowie eine oder mehrere weitere Siebeinrichtungen 22 zur Sortierung des durch die Brecheinrichtung 20 zerkleinerten mineralischen Materials gemäß seiner Korngröße aufgenommen.

Bandfördervorrichtungen 24 und 26 fördern zerkleinertes und sortiertes mineralisches Material vom Maschinenkörper 28 der Gesteinsverarbeitungsvorrichtung 10 weg auf sich unter dem jeweiligen vom Maschinenkörper 28 fernliegenden Längsende 24a bzw. 26a der Bandfördervorrichtungen 24 und 26 durch Aufschüttung bildenden Halden. Die Halden sind in Fig. 1 nicht dargestellt. Die Bandfördervorrichtung 24 ist dabei ein sogenanntes "Seitenaustragsband", die Bandfördervorrichtung 26 wird als "Brecherabzugsband" bezeichnet. Die Bandfördervorrichtungen 24 und 26 sind in ihrem prinzipiellen Aufbau gleich und unterscheiden sich lediglich in Abmessungen ihrer Bauteile und in Gestaltungsdetails ihrer Bauteile und Baugruppen, die jedoch im Wesentlichen identische Funktionalitäten bereitstellen.

Zur besseren Übersichtlichkeit sind nachfolgend nur die einzelnen Bauteile des Brecherabzugsbands 26 mit Bezugszeichen versehen. Es ist jedoch offensichtlich, dass das Seitenaustragsband 24 die im Wesentlichen gleichen Bauteile umfasst.

Das Brecherabzugsband 26 weist einen Vorrichtungsrahmen 30 auf, von welchem Rahmenteile 30a und 30b beiderseits eines endlos umlaufenden Förderbands 32 im Wesentlichen parallel zu diesem verlaufen. Eine lokale Förderrichtung des Förderbands 32 ist durch den Pfeil FD angezeigt.

An dem vom Maschinenkörper 28 auskragenden Längsende 26a des Brecherabzugsbands 26 befindet sich eine in Fig. 1 nicht dargestellte Umlenkrolle, von welcher lediglich strichpunktiert ihre Rollendrehachse RA angezeigt ist. Eine weitere in Fig. 1 ebenfalls nicht dargestellte Umlenkrolle ist an dem in Fig. 1 nicht zu erkennenden dem Maschinenkörper 28 näheren Längsende des Brecherabzugsbands 26 angeordnet. Die letztgenannte Umlenkrolle ist bevorzugt eine angetriebene Umlenkrolle, um die Energieversorgung der angetriebenen Umlenkrolle kurz zu halten. Die Umlenkrolle am auskragenden Längsende 26a ist dagegen eine Spann-Umlenkrolle, die einfacher für Arbeiten an der Spannvorrichtung des Brecherabzugsbands 26 zugänglich ist.

Die Gesteinsverarbeitungsvorrichtung 10 aus Fig. 1 ist in ihrem grundsätzlichen Aufbau und in ihrer Funktionsweise bekannt.

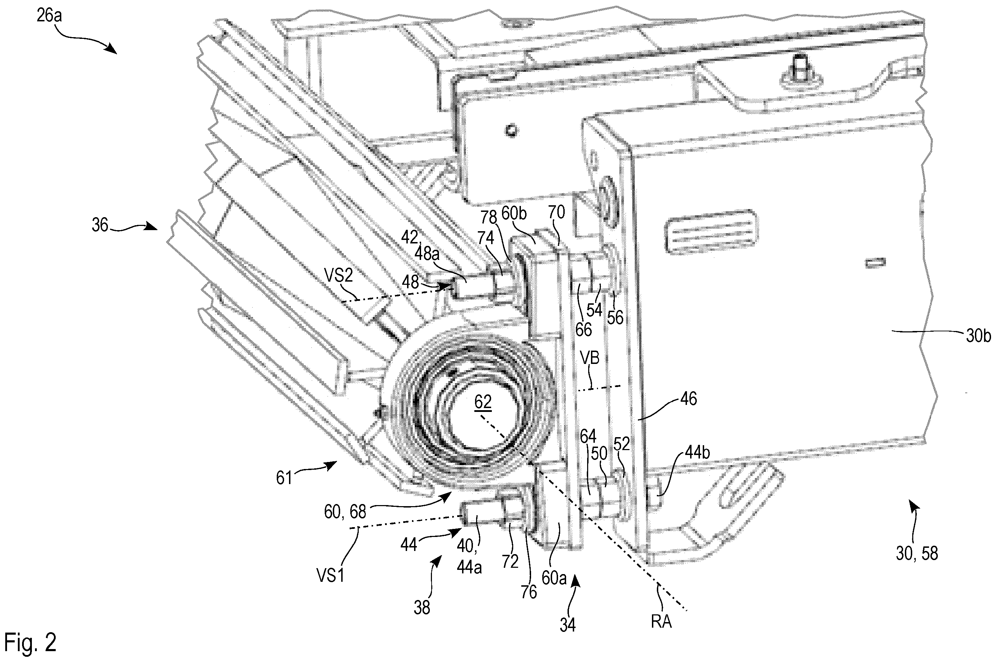

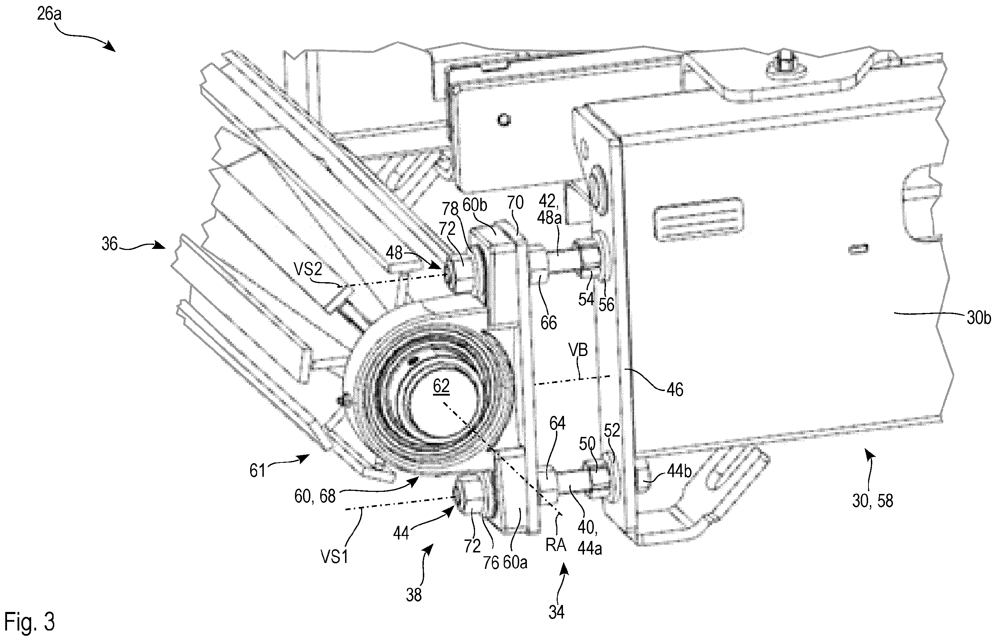

In den Fig. 2 und 3 ist das auskragende Längsende 26a des Brecherabzugsbands 26 ausschnittsweise perspektivisch aus Sicht des Pfeils II, III von Fig. 1 dargestellt. Der besseren Übersichtlichkeit wegen ist das endlos umlaufende Förderband 32 in den Figuren 2 und 3 weggelassen.

Am Längsende des Rahmenteils 30b ist eine Spannvorrichtung 34 angeordnet, welche durch Verlagerung der Spann-Umlenkrolle 36 längs einer Verlagerungsbahn VB vom Vorrichtungsrahmen 30 bzw. vom Rahmenteil 30b weg und auf diesen bzw. dieses zu das endlos umlaufende Förderband 32 spannt und entspannt, um dessen störungsfreien Betrieb sicherzustellen. In Fig. 2 ist die Spann-Umlenkrolle 36 in ihrer maximal an den Vorrichtungsrahmen 30 bzw. an das Rahmenteil 30b angenäherten Position dargestellt, in welcher eine durch die Spannvorrichtung 34 erzeugte Spannung des endlos umlaufenden Förderbands 32 am geringsten ist.

Die Spannvorrichtung 34 umfasst eine Gewindestangenanordnung 38 mit einer ersten Gewindestange 40 und mit einer zweiten Gewindestange 42. Die erste Gewindestange 40 ist ein Gewindeschaft 44a einer handelsüblichen Schraube 44, deren Schraubenkopf 44b auf der von der Spann-Umlenkrolle 36 wegweisenden Seite einer Befestigungsplatte 46 als einer Befestigungsformation anliegt.

Für die zweite Gewindestange 42 gilt das Gleiche. Ihr Schraubenkopf ist jedoch in Fig. 2 durch das Rahmenteil 30b verdeckt. Die zweite Gewindestange 42 ist ein Gewindeschaft 48a einer handelsüblichen Schraube 48. Die Schrauben 44 und 48 sind bevorzugt identisch.

Die mit dem Rahmenteil 30b verschweißte Befestigungsplatte 46 ist an der ersten Gewindestange 40 durch den Schraubenkopf 44b als einer ersten Klemmformation und durch eine Klemmmutter 50 als eine zweite Klemmformation unter Zwischenanordnung einer Unterlegscheibe 52 geklemmt. Gleiches gilt für die zweite Gewindestange 42 mit der dort angeordneten Klemmmutter 54 und der zwischenangeordneten Unterlegscheibe 56. Die beiden Gewindestangen 40 und 42 sind somit translatorisch und rotatorisch relativ zum Vorrichtungsrahmen 30 unbeweglich an diesem festgelegt. Der Vorrichtungsrahmen 30 ist im dargestellten Ausführungsbeispiel daher eine Fixstruktur 58.

Zwischen dem Schraubenkopf 44b der Gewindestange 40 und der Befestigungsplatte 46 ist ebenfalls eine Unterlegscheibe 52 angeordnet. Diese ist in den Figuren jedoch durch die Befestigungsplatte 46 verdeckt. Ebenso ist bevorzugt zwischen dem Schraubenkopf der Gewindestange 42 und der Befestigungsplatte 46 eine Unterlegscheibe 52 angeordnet.

Die Spann-Umlenkrolle 36 ist in einem ersten Lagerbock 60 um ihre virtuelle Spann-Rollendrehachse RA gelagert. Der Lagerbock 60 ist bevorzugt ein einstückig hergestelltes Gussbauteil, welches eine Drehwelle 62 der Spann-Umlenkrolle 36 mittels einer Gleitlagerung oder alternativ mittels einem Kugel- oder Rollenlager lagert. Der erste Lagerbock ist Teil einer Lagerbockanordnung 61, zu der ein bevorzugt identisch ausgebildeter zweiter Lagerbock am entgegengesetzten Längsende der Spann-Umlenkrolle 36 gehört.

Der erste Lagerbock 60 weist zu entgegengesetzten Seiten auskragende Halteformationen 60a und 60b auf, welche jeweils ein in den Figuren nicht dargestelltes Durchgangsloch aufweisen, das von der ersten Gewindestange 40 bzw. von der zweiten Gewindestange 42 durchsetzt ist.

Auf der ersten Gewindestange 40 ist eine erste Stellmutter 64 in Schraubeingriff mit der ersten Gewindestange 40 aufgenommen. Auf der zweiten Gewindestange 42 ist eine zweite Stellmutter 66 im Schraubeingriff mit der zweiten Gewindestange 42 aufgenommen. Die erste Stellmutter 64 und die zweite Stellmutter 66 begrenzen eine Annäherung des ersten Lagerbocks 60 an den Vorrichtungsrahmen 30 bzw. an das Rahmenteil 30b.

Die erste Gewindestange 40 erstreckt sich längs einer virtuellen ersten Stangenachse VS1, die zweite Gewindestange 42 erstreckt sich längs einer zur virtuellen ersten Stangenachse VS1 parallelen virtuellen zweiten Stangenachse VS2.

Der Lagerbock 60 bildet im dargestellten Ausführungsbeispiel eine durch Drehung der Stellmuttern 64 und 66 längs der zu den virtuellen Stangenachsen VS1 und VS2 parallelen Verlagerungsbahn VB positionierbare Stützstruktur 68, welche an den Stellmuttern 64 und 66 unter Zwischenanordnung eines einstückigen Zwischenstücks 70 abgestützt ist.

Das Zwischenstück 70 ist im dargestellten Ausführungsbeispiel eine Metallplatte, welche die lokal an den Stellmuttern 64 und 66 auftretenden und auf den Lagerbock 60 rückwirkenden Abstützkräfte auf eine größere Einwirkfläche des Lagerbocks 60 verteilt und somit dessen lokale Belastung durch die Abstützung an den Stellmuttern 64 und 66 reduziert.

Der Lagerbock 60 ist an den Gewindestangen 40 und 42 durch stützstrukturseitige weitere Klemmformationen in der Gestalt von Klemmmuttern 72 und 74 gesichert. Die Klemmmutter 72 bildet gemeinsam mit der ersten Stellmutter 64 stützstrukturseitige Klemmformationen, welche die Halteformation 60a zwischen sich klemmend an der ersten Gewindestange 40 festlegen. Die Klemmmutter 74 bildet gemeinsam mit der zweiten Stellmutter 66 stützstrukturseitige Klemmformationen, welche die Halteformation 60b zwischen sich klemmend an der zweiten Gewindestange 42 festlegen. Zum Schutz der Halteformationen 60a und 60b ist zwischen den Klemmmuttern 72 und 74 und der jeweiligen Halteformation 60a bzw. 60b jeweils eine Unterlegscheibe 76 bzw. 78 angeordnet. Ebenso ist bevorzugt zwischen den Stellmuttern 64 und 66 einerseits und der jeweiligen Halteformation 60a bzw. 60b jeweils wenigstens eine Unterlegscheibe angeordnet. Diese Unterlegscheiben sind in der Figur jedoch durch die Halteformationen 60a und 60b sowie durch das Zwischenstück 70 verdeckt.

In Fig. 3 ist die Spann-Umlenkrolle 36 mit ihrem ersten Lagerbock 60 in der längs der Verlagerungsbahn VB maximal vom Vorrichtungsrahmen 30 bzw. vom Rahmenteil 30b entfernten Position dargestellt. Die die Gewindestangen 40 und 42 aufweisenden handelsüblichen Schrauben 44 bzw. 48 können beispielsweise Schrauben mit einem metrischen Gewinde M20 sein.

Über die Gewindestangen 40 und 42 sowie die Stellmuttern 64 und 66 hinaus benötigt die Spannvorrichtung 34 nach der Festlegung der Gewindestangen 40 und 42 am Vorrichtungsrahmen 30 keine weiteren Bauteile, um die Lage der virtuellen Spann-Rollendrehachse RA längs der Verlagerungsbahn VB relativ zum Vorrichtungsrahmen 30 festzulegen. Insbesondere werden keine Führungsstruktur, wie Führungsschienen oder Führungsstangen, benötigt.

Ein Kippmoment des ersten Lagerbocks 60 an den Abstützstellen der Gewindestangen 40 und 42 ist dadurch ausgeschlossen, dass die verlängert gedachte virtuelle Spann-Rollendrehachse RA zwischen den verlängert gedachten virtuellen Stangenachsen VS1 und VS2 gelegen ist, vorzugsweise mit gleichem Abstand von jeder der virtuellen Stangenachsen VS1 und VS2.

Das in den Figuren 2 und 3 nicht dargestellte, bezüglich der virtuellen Spann-Rollendrehachse RA entgegengesetzte Längsende der Spann-Umlenkrolle 36 ist am Rahmenteil 30a in gleicher Weise gelagert wie das in den Figuren 2 und 3 dargestellten Längsende am Rahmenteil 30b gelagert ist. Die Lagerung der Spann-Umlenkrolle 36 am Vorrichtungsrahmen 30 ist bezüglich einer zur virtuellen Spann-Rollendrehachse RA orthogonalen Symmetrieachse spiegelsymmetrisch. Im dargestellten Ausführungsbeispiel mit äquidistant von den virtuellen Stangenachsen VS1 und VS2 angeordneter virtueller Spann-Rollendrehachse RA ist die Lagerung der Spann-Umlenkrolle 36 am Vorrichtungsrahmen 30 auch bezüglich einer die Spann-Rollendrehachse RA enthaltenden und zu den virtuellen Stangenachsen VS1 und VS2 parallelen Symmetrieachse spiegelsymmetrisch.

## Patentansprüche

1. Spannbare Bandfördervorrichtung (24, 26) zur Förderung von mineralischem Material, wobei die Spannbare Bandfördervorrichtung (24, 26) umfasst:
- einen Vorrichtungsrahmen (30),
- eine erste und eine zweite Umlenkrolle (36), welche jeweils von dem Vorrichtungsrahmen (30) getragen sind, wobei jede Umlenkrolle (36) aus der ersten und der zweiten Umlenkrolle (36) um eine quer zur lokalen Förderrichtung (FD) verlaufende virtuelle Rollendrehachse (RA) drehbar ist,
- ein endlos um die erste und die zweite Umlenkrolle (36) umlaufendes Förderband (32),
- eine Lagerbockanordnung (61) mit einem ersten (60) und einem zweiten Lagerbock, welche eine Umlenkrolle (36) aus der ersten und der zweiten Umlenkrolle (36) als Spann-Umlenkrolle (36) um ihre virtuelle Spann-Rollendrehachse (RA) drehbar lagern, wobei der erste (60) und der zweite Lagerbock längs der virtuellen Spann-Rollendrehachse (RA) mit Abstand voneinander angeordnet sind, und
- eine Spannvorrichtung (34) zur Verlagerung der Spann-Umlenkrolle (36) relativ zum Vorrichtungsrahmen (30) längs einer Verlagerungsbahn (VB), welche quer zur virtuellen Rollendrehachse (RA) der Spann-Umlenkrolle (36) verläuft, wobei die Spannvorrichtung (34) zur Verlagerung der Lagerbockanordnung (61) eine Gewindestangenanordnung (38) mit wenigstens einer Gewindestange (40, 42) aufweist,
**dadurch gekennzeichnet, dass** die Gewindestangenanordnung (38) wenigstens eine sich längs einer virtuellen ersten Stangenachse (VS1) erstreckende erste Gewindestange (40) mit jeweils einer von der ersten Gewindestange (40) im Schraubeingriff getragenen ersten Stellmutter (64) und wenigstens eine sich längs einer virtuellen zweiten Stangenachse (VS2) erstreckende zweite Gewindestange (42) mit jeweils einer von der zweiten Gewindestange (42) im Schraubeingriff getragenen zweiten Stellmutter (66) aufweist,
wobei die wenigstens eine erste Gewindestange (40) an einer Struktur aus Vorrichtungsrahmen (30) und erstem Lagerbock (60) als einer ersten Fixstruktur (58) relativ zur ersten Fixstruktur (58) translatorisch längs der virtuellen ersten Stangenachse (VS1) unbeweglich festgelegt ist, wobei die jeweils andere Struktur aus Vorrichtungsrahmen (30) und erstem Lagerbock (60) als eine erste Stützstruktur (68) in Richtung zur ersten Fixstruktur (58) hin durch die wenigstens eine erste Stellmutter (64) körperlich abgestützt ist,
wobei die wenigstens eine zweite Gewindestange (42) an einer Struktur aus Vorrichtungsrahmen (30) und erstem Lagerbock (60) als einer zweiten Fixstruktur (58) relativ zur zweiten Fixstruktur (58) translatorisch längs der virtuellen zweiten Stangenachse (VS2) unbeweglich festgelegt ist, wobei die jeweils andere Struktur aus Vorrichtungsrahmen (30) und erstem Lagerbock (60) als eine zweite Stützstruktur (68) in Richtung zur zweiten Fixstruktur (58) hin durch die wenigstens eine zweite Stellmutter körperlich abgestützt ist.

2. Spannbare Bandfördervorrichtung (24, 26) nach Anspruch 1,
**dadurch gekennzeichnet, dass** die erste Fixstruktur (58) auch die zweite Fixstruktur (58) ist.

3. Spannbare Bandfördervorrichtung (24, 26) nach Anspruch 1 oder 2,
**dadurch gekennzeichnet, dass** die erste Fixstruktur (58) oder/und die zweite Fixstruktur (58) der Vorrichtungsrahmen (30) ist.

4. Spannbare Bandfördervorrichtung (24, 26) nach einem der vorhergehenden Ansprüche,
**dadurch gekennzeichnet, dass** die erste Gewindestange (40) eine erste Befestigungsformation (46) der ersten Fixstruktur (58) durchsetzt, wobei die erste Befestigungsformation (46) zwischen zwei mit der ersten Gewindestange (40) verbundenen fixstrukturseitigen Klemmformationen (44b, 50) geklemmt ist, oder/und dass die zweite Gewindestange (42) eine zweite Befestigungsformation (46) der zweiten Fixstruktur (58) durchsetzt, wobei die zweite Befestigungsformation (46) zwischen zwei mit der zweiten Gewindestange (42) verbundenen fixstrukturseitigen Klemmformationen (54) geklemmt ist.

5. Spannbare Bandfördervorrichtung (24, 26) nach einem der vorhergehenden Ansprüche,
**dadurch gekennzeichnet, dass** die wenigstens eine erste Gewindestange (40) relativ zur ersten Fixstruktur (58) oder/und relativ zur ersten Stützstruktur (68) rotatorisch um die virtuelle erste Stangenachse (VS1) unbeweglich angeordnet ist, oder/und dass die wenigstens eine zweite Gewindestange (42) relativ zur zweiten Fixstruktur (58) oder/und relativ zur zweiten Stützstruktur (68) rotatorisch um die virtuelle zweite Stangenachse (VS2) unbeweglich angeordnet ist.

6. Spannbare Bandfördervorrichtung (24, 26) nach einem der vorhergehenden Ansprüche,
**dadurch gekennzeichnet, dass** die wenigstens eine erste Gewindestange (40) in wenigstens eine erste Aufnahmeöffnung der ersten Stützstruktur (68) einragt oder/und dass die wenigstens eine zweite Gewindestange (42) in wenigstens eine zweite Aufnahmeöffnung der zweiten Stützstruktur (68) einragt.

7. Spannbare Bandfördervorrichtung (24, 26) nach Anspruch 6,
**dadurch gekennzeichnet, dass** die wenigstens eine erste Gewindestange (40) eine die wenigstens eine erste Aufnahmeöffnung aufweisende erste Halteformation (60a) der ersten Stützstruktur (68) durchsetzt, wobei die erste Halteformation (60a) zwischen zwei mit der wenigstens einen ersten Gewindestange (40) verbundenen stützstrukturseitigen Klemmformationen (64, 72) geklemmt ist oder/und dass die wenigstens eine zweite Gewindestange (42) eine die wenigstens eine zweite Aufnahmeöffnung aufweisende zweite Halteformation (60b) der zweiten Stützstruktur (68) durchsetzt, wobei die zweite Halteformation (60b) zwischen zwei mit der wenigstens einen zweiten Gewindestange (42) verbundenen stützstrukturseitigen Klemmformationen (66, 74) geklemmt ist.

8. Spannbare Bandfördervorrichtung (24, 26) nach Anspruch 7,
**dadurch gekennzeichnet, dass** eine der mit der ersten Gewindestange (40) verbundenen stützstrukturseitigen Klemmformationen (64, 72) die erste Stellmutter (64) ist oder/und dass eine der mit der zweiten Gewindestange (42) verbundenen stützstrukturseitigen Klemmformationen (66, 74) die zweite Stellmutter (66) ist.

9. Spannbare Bandfördervorrichtung (24, 26) nach einem der vorhergehenden Ansprüche,
**dadurch gekennzeichnet, dass** zwischen der ersten Stellmutter (64) und der ersten Stützstruktur (68) wenigstens ein starres erstes Zwischenstück (70) angeordnet ist oder/und dass zwischen der zweiten Stellmutter (66) und der ersten Stützstruktur (68) wenigstens ein starres zweites Zwischenstück (70) angeordnet ist.

10. Spannbare Bandfördervorrichtung (24, 26) nach einem der vorhergehenden Ansprüche,
**dadurch gekennzeichnet, dass** die virtuelle erste Stangenachse (VS1) und die virtuelle zweite Stangenachse (VS2) einen Winkel von nicht mehr als 15° einschließen.

11. Spannbare Bandfördervorrichtung (24, 26) nach einem der vorhergehenden Ansprüche,
**dadurch gekennzeichnet, dass** die wenigstens eine erste Gewindestange (40) und die wenigstens eine zweite Gewindestange (42) derart angeordnet sind, dass die verlängert gedachte virtuelle Spann-Rollendrehachse (RA) zwischen den verlängert gedachten virtuellen Stangenachsen (VS1, VS2) der ersten (40) und der zweiten Gewindestange (42) hindurch verläuft.

12. Spannbare Bandfördervorrichtung (24, 26) nach einem der vorhergehenden Ansprüche,
**dadurch gekennzeichnet, dass** der erste Lagerbock (60) nur durch die in wenigstens einem der vorhergehenden Ansprüche genannten Bauteile relativ zum Vorrichtungsrahmen (30) positioniert ist.

13. Spannbare Bandfördervorrichtung (24, 26) nach einem der vorhergehenden Ansprüche,
**dadurch gekennzeichnet, dass** die Gewindestangenanordnung (34) wenigstens eine sich längs einer virtuellen dritten Stangenachse erstreckende dritte Gewindestange mit jeweils einer von der wenigstens einen dritten Gewindestange im Schraubeingriff getragenen dritten Stellmutter und wenigstens eine sich längs einer virtuellen vierten Stangenachse erstreckende vierte Gewindestange mit jeweils einer von der wenigstens einen vierten Gewindestange im Schraubeingriff getragenen vierten Stellmutter aufweist,
wobei die wenigstens eine dritte Gewindestange an einer Struktur aus Vorrichtungsrahmen (30) und zweitem Lagerbock als einer dritten Fixstruktur translatorisch längs der virtuellen dritten Stangenachse unbeweglich festgelegt ist, wobei die jeweils andere Struktur aus Vorrichtungsrahmen (30) und zweitem Lagerbock als eine dritte Stützstruktur in Richtung zur dritten Fixstruktur hin durch die wenigstens eine dritte Stellmutter körperlich abgestützt ist,
wobei die wenigstens eine vierte Gewindestange an einer Struktur aus Vorrichtungsrahmen (30) und zweitem Lagerbock (60) als einer vierten Fixstruktur translatorisch längs der virtuellen vierten Stangenachse unbeweglich festgelegt ist, wobei die jeweils andere Struktur aus Vorrichtungsrahmen (30) und zweitem Lagerbock als eine vierte Stützstruktur in Richtung zur vierten Fixstruktur hin durch die wenigstens eine vierte Stellmutter körperlich abgestützt ist.

14. Spannbare Bandfördervorrichtung (24, 26) nach Anspruch 13,
**dadurch gekennzeichnet, dass** das in wenigstens einem der Ansprüche 2 bis 12 zur wenigstens einen ersten Gewindestange (40) und dem ersten Lagerbock (60) Gesagte auch für die wenigstens eine dritte Gewindestange und den zweiten Lagerbock gilt oder/und dass das in wenigstens einem der Ansprüche 2 bis 11 zur wenigstens einen zweiten Gewindestange (42) und dem ersten Lagerbock (60) Gesagte auch für die wenigstens eine vierte Gewindestange und den zweiten Lagerbock gilt.

15. Verarbeitungsvorrichtung (10), insbesondere selbstfahrende Verarbeitungsvorrichtung, zur zerkleinernden oder/und sortierenden Verarbeitung von mineralischem Material, umfassend eine Materialaufgabe (14), wenigstens eine Zerkleinerungsvorrichtung (20) oder/und wenigstens eine Sortiervorrichtung (18, 22) und wenigstens eine spannbare Bandfördervorrichtung (24, 26) gemäß einem der vorhergehenden Ansprüche.
